(19) **Europäisches Patentamt / European Patent Office / Office européen des brevets**

(11) **EP 3 941 076 B1**

(12) **FASCICULE DE BREVET EUROPEEN**

(45) Date de publication et mention de la délivrance du brevet:
**30.08.2023 Bulletin 2023/35**

(21) Numéro de dépôt: **21184618.3**

(22) Date de dépôt: **08.07.2021**

(51) Classification Internationale des Brevets (IPC):
*H04N 21/44* (2011.01)    *H04N 21/8547* (2011.01)
*H04N 21/43* (2011.01)    *H04N 21/434* (2011.01)
*H04N 21/436* (2011.01)    *H04N 21/439* (2011.01)

(52) Classification Coopérative des Brevets (CPC):
**H04N 21/44004; H04N 21/4302; H04N 21/4305; H04N 21/4307; H04N 21/4341; H04N 21/43615; H04N 21/4392; H04N 21/8547**

(54) **PROCÉDÉ, SYSTÈME ET PROGRAMME DE DIFFUSION DE SIGNAUX AUDIO/VIDÉO AVEC UN AJUSTEMENT AUTOMATIQUE DE LATENCE**

VERFAHREN, SYSTEM UND PROGRAMM ZUR ÜBERTRAGUNG VON AUDIO/VIDEO-SIGNALEN MIT AUTOMATISCHER LATENZANPASSUNG

METHOD, SYSTEM AND PROGRAMME FOR DISTRIBUTING AUDIO/VIDEO SIGNALS WITH AN AUTOMATIC LATENCY ADJUSTMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2020 FR 2007311**

(43) Date de publication de la demande:
**19.01.2022 Bulletin 2022/03**

(73) Titulaire: **SAGEMCOM BROADBAND SAS**
**92500 Rueil-Malmaison (FR)**

(72) Inventeurs:
• **BOUVIGNE, Gabriel**
**92500 RUEIL MALMAISON (FR)**

• **SCHOTT, Vincent**
**92500 RUEIL MALMAISON (FR)**
• **SODI, Frédéric**
**92500 RUEIL MALMAISON (FR)**

(74) Mandataire: **Lavialle, Bruno François Stéphane et al**
**Cabinet Boettcher**
**5 rue de Vienne**
**75008 Paris (FR)**

(56) Documents cités:
**US-A1- 2010 142 927    US-A1- 2013 279 888
US-A1- 2017 125 026    US-A1- 2018 077 443**

EP 3 941 076 B1

**Description**

La présente invention concerne le domaine de la diffusion de signaux audio/vidéo.

ARRIERE PLAN DE L'INVENTION

Il est connu des décodeurs audio/vidéo comprenant un démultiplexeur ayant une entrée reliée à une source de données numériques audio/vidéo, et deux sorties reliées respectivement à un circuit de traitement audio et à un circuit de traitement vidéo. Le circuit de traitement audio est agencé pour traiter des données audio et les transmettre sous forme de signaux audio à un organe de restitution sonore comme un ou plusieurs haut-parleurs reliés au décodeur et le circuit de traitement vidéo est agencé pour traiter des données vidéo et les transmettre sous forme de signaux vidéo à un écran d'affichage comme un téléviseur relié au décodeur. Il est indispensable que la transmission des données audio à l'organe de restitution sonore soit synchronisée avec la transmission des données vidéo au téléviseur de telle manière que les sons diffusés correspondent aux images affichées.

A cette fin, et comme le traitement audio n'a pas forcément la même durée que le traitement vidéo, les circuits de traitement audio et vidéo comportent chacun une mémoire tampon (couramment abrégée en tampon) dans laquelle les données audio et vidéo sont stockés avant leur transmission. Des indices temporels de présentation (ou PTS de l'anglais « présentation timestamp ») sont associés aux données stockées et le décodeur comprend une horloge de référence à partir de laquelle est déterminé l'instant où les données audio et les données vidéo portant le même indice temporel de présentation seront transmises simultanément respectivement à l'organe de restitution sonore et au téléviseur.

Le document US-A-2013/279888 décrit un système audio/vidéo mettant en oeuvre des mémoires tampon.

Ceci ne pose généralement pas de problème lorsque le décodeur est relié à l'organe de restitution sonore par une liaison filaire peu sujette aux perturbations externes.

Toutefois, il est de plus en plus courant que le décodeur soit relié par une liaison radioélectrique de type Wi-Fi à une enceinte sans fil. Le circuit de traitement audio du décodeur est alors agencé pour fournir des données audio à un émetteur radioélectrique et l'enceinte comprend un récepteur radioélectrique relié à un circuit de décodage agencé pour fournir à l'organe de restitution sonore des données audio issues du décodage des données audio émises par le circuit de traitement audio. Or, il est courant que la liaison radioélectrique soit perturbée par exemple par la structure du bâtiment ou des rayonnements électromagnétiques parasites. Ces perturbations occasionnent des retards dans la réception des données audio, leur décodage et la fourniture des données audio à l'organe de restitution sonore. Comme ces perturbations et les retards qui en découlent vont varier selon les lieux mais également selon le temps, les constructeurs prévoient dans l'enceinte un tampon de taille prédéterminée pour autoriser une latence dans la restitution des données audio compensant un retard maximum prédéfini (la taille du tampon étant directement proportionnelle à la durée de ce retard) de manière à conserver une synchronisation avec les données vidéo même en cas de perturbation. Il en résulte que, dans certains lieux et/ou à un instant donné dans un lieu, le tampon sera surdimensionné et que, dans d'autres lieux et/ou à un autre instant donné dans le même lieu, il sera sous-dimensionné et ne permettra pas de maintenir une parfaite synchronisation de l'image et du son. En outre, comme la latence dans la restitution sonore impose également de retarder les données vidéo pour conserver une synchronisation de l'image et du son, il n'est pas souhaitable de prévoir un tampon si important qu'il introduirait un retard perceptible par l'utilisateur.

Le document US-A-2018/077443 décrit un système audio/vidéo mettant en oeuvre une liaison de transmission filaire et une liaison de transmission non-filaire et mentionne un problème de la synchronisation de la restitution sonore issu d'une asymétrie des liaisons de transmission.

OBJET DE L'INVENTION

L'invention a notamment pour but de remédier au moins partiellement à ces inconvénients.

RESUME DE L'INVENTION

A cet effet, on prévoit, selon l'invention un procédé selon la revendication 1.

Ainsi, il est possible d'ajuster la latence selon les besoins, et plus particulièrement selon les perturbations rencontrées par le passé, de manière à conserver une synchronisation des images avec la bande son.

Selon un mode de mise en oeuvre particulier, l'objectif de remplissage est égal à la somme d'une valeur de sécurité et d'une marge.

Alternativement alors :

- la marge est égale au niveau de remplissage minimum sur une durée passée prédéterminée, par exemple environ 2 minutes ;
- la marge est égale au dixième de la somme de la marge précédente et de neuf fois le niveau de remplissage actuel.

De préférence, séparément ou en combinaison :

- la valeur de sécurité correspond à un remplissage autorisant une latence comprise entre 70 ms et 200 ms ;
- la valeur de sécurité est augmentée si la marge a été négative un nombre de fois supérieur à un seuil pendant un laps de temps prédéterminé ;
- le procédé comprend une première étape de fort ajustement lorsque le niveau de remplissage est inférieur à une première valeur seuil correspondant à un premier pourcentage de la valeur de sécurité, la première valeur seuil est par exemple égale à environ 80% de la valeur de sécurité et la latence est modifiée d'une valeur inférieure ou égale à 20ms ;
- le procédé comprend une deuxième étape de fort ajustement lorsque le niveau de remplissage est inférieur à une deuxième valeur seuil inférieure à la première valeur seuil, la deuxième valeur seuil est par exemple égale à environ 60% de la valeur de sécurité et la latence est modifiée d'une valeur inférieure ou égale à 40ms.

Avantageusement, le nombre de trames audio mémorisées est diminué si la différence de remplissage est au moins égale à un pourcentage prédéterminé en plus de l'objectif de remplissage et, de préférence, le pourcentage prédéterminé est par exemple égal à 25% environ.

Selon une caractéristique particulière, le niveau de remplissage du tampon est déterminé à chaque sortie d'une trame audio hors du tampon ou à intervalle régulier.

Selon un premier mode particulier d'ajustement, le décodeur et l'enceinte comprenant chacun une horloge et les horloges étant synchronisées, le nombre de trames audio mémorisées est augmenté en retardant les horloges d'une durée prédéterminée et le nombre de trames audio mémorisées est diminué en avançant les horloges d'une durée prédéterminée. Cette durée prédéterminée est préférablement égale à une faible valeur, par exemple inférieure ou égale à 150 ps, telle que la valeur de 50 $\mu$s.

Cette durée peut être prédéterminée de façon fixe (la valeur de l'ajustement est fixe pour la session d'utilisation) ou dynamique (la valeur de l'ajustement varie en fonction de l'ajustement total à réaliser).

Selon un deuxième mode particulier d'ajustement, un indice temporel de présentation étant associé à chaque donnée vidéo et à chaque trame audio correspondante, le nombre de trames audio mémorisées est augmenté en en ajoutant une durée prédéterminée aux indices temporels de présentation et le nombre de trames audio mémorisées est diminué en retranchant une durée prédéterminée des indices temporels de présentation. Cette durée prédéterminée est préférablement égale à une faible valeur, par exemple inférieure ou égale à 150 ps, telle que la valeur de 50 $\mu$s.

Avantageusement, après une diminution de la latence, le procédé comprend l'étape de :

- supprimer des échantillons d'une trame audio avant transmission à l'organe de restitution sonore ou rééchantillonner une trame audio ;
- éventuellement, supprimer une image dans les données vidéo.

Avantageusement, après une augmentation de la latence, le procédé comprend l'étape de :

- ajouter des échantillons dans une trame audio avant transmission à l'organe de restitution sonore ou rééchantillonner une trame audio ou interpoler des échantillons dans une trame audio ;
- éventuellement, insérer une nouvelle une image dans les données vidéo, par exemple au moyen d'une duplication ou d'une interpolation.

L'invention concerne également :

- un système pour la mise en oeuvre de ce procédé ;
- un programme comportant des instructions pour la mise en oeuvre de ce procédé ;
- un support de données contenant un tel programme.

D'autres caractéristiques et avantages de l'invention ressortiront à la lecture de la description qui suit d'un mode de réalisation particulier et non limitatif de l'invention.

BREVE DESCRIPTION DES DESSINS

Il sera fait référence aux dessins annexés, parmi lesquels :

[Fig. 1] la figure 1 est une vue schématique d'un système selon l'invention ;
[Fig. 2] la figure 2 est une vue schématique d'un tampon de l'enceinte ;
[Fig. 3] la figure 3 illustre un premier mode d'ajustement de la latence selon l'invention ;
[Fig. 4] la figure 4 illustre un deuxième mode d'ajustement de la latence selon l'invention ;
[Fig. 5] la figure 5 illustre un troisième mode d'ajustement de la latence selon l'invention.

DESCRIPTION DETAILLEE DE L'INVENTION

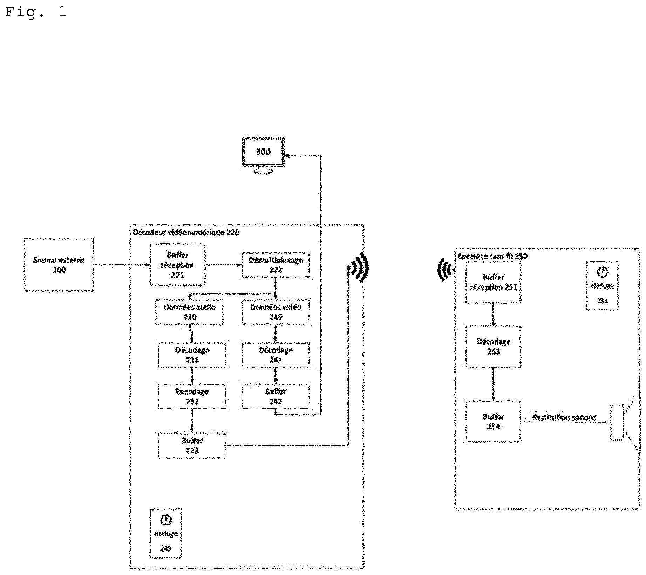

En référence à la figure 1, le système audio/vidéo selon l'invention comprend un appareil décodeur 220 relié à un écran d'affichage 300 et à une enceinte sans fil 250. L'appareil décodeur 220 possède une unité électronique de commande qui comprend un démultiplexeur 222 ayant une entrée reliée à une source 200 de données numériques audio/vidéo via un tampon de réception 221, une première sortie reliée à un circuit de traitement vidéo agencé pour fournir à l'écran d'affichage 300 des données vidéo représentatives d'images et une deuxième sortie reliée à un circuit de traitement audio agencé pour fournir à un émetteur radioélectrique des trames audio encodées.

La source 200 peut être un réseau numérique de données (comme par exemple un réseau satellitaire, un réseau câblé de télévision, une liaison xDSL, le réseau Internet ou un réseau informatique local) ou une source interne comme un disque dur ou un support mémoire amovible comme une carte mémoire. Le démultiplexeur 222 est connu en lui-même et agencé pour extraire, des données numériques audio/vidéo, d'une part les données audio 230 et d'autre part les données vidéo 240 qui vont être fournies respectivement au circuit de traitement audio et au circuit de traitement vidéo.

Le circuit de traitement vidéo comprend successivement un décodeur 241 associé à un tampon 242 de mémorisation des données vidéo décodées. Les données vidéo sont représentatives chacune d'une image à laquelle est associé un indice temporel de présentation PTS. Le tampon 242 est relié à l'écran d'affichage 300, ici un téléviseur.

Le circuit de traitement audio comprend successivement un décodeur 231, un encodeur 232 et un tampon 233 de mémorisation des données audio réencodées. Chaque donnée audio réencodée est une trame audio à laquelle est associé un indice temporel de présentation (PTS) correspondant à celui de l'image correspondant à chaque image avec laquelle la trame audio doit être simultanément présentée. L'encodeur 232 est relié à l'émetteur radioélectrique 234 via le tampon 233.

L'enceinte 250 comprend un récepteur radioélectrique 255 relié à une unité électronique de commande qui comprend un circuit de décodage agencé pour fournir à un organe de restitution sonore 256, ici un haut-parleur, des trames audio décodées issues du décodage des données audio réencodées reçues par le récepteur radioélectrique 255.

Le circuit de décodage de l'enceinte 250 comprend un décodeur 253 ayant une entrée reliée au récepteur radioélectrique 255 via un tampon de réception 252 et une sortie reliée à l'organe de restitution sonore 256 via un tampon 254 de mémorisation de trames audio et circuit audio non représenté comprenant notamment un convertisseur numérique/analogique et un amplificateur. On comprend que tant le tampon 252 que le tampon 254 autorisent une latence entre la réception des données audio réencodées et la fourniture des données audio décodées à l'organe de restitution sonore 256.

En pratique, l'unité électronique de commande de l'appareil décodeur 220 et l'unité électronique de commande de l'enceinte 250 comprennent un processeur et des mémoires leur permettant d'exécuter des programmes informatiques ayant des instructions agencées pour mettre en oeuvre le programme de l'invention. Ainsi, les démultiplexeurs, décodeurs, encodeurs sont ici des parties de programmes informatiques. En variantes, des circuits électroniques dédiés pourraient être utilisés pour assurer ces fonctions. En fonctionnement, l'unité électronique de commande de l'appareil décodeur 220 reçoit des données audio/vidéo depuis la source 200 et les place dans son tampon de réception 221. Les données audio 230 et vidéo 240 sont séparées par le biais du démultiplexeur 222.

Les données vidéo sont décodées par le décodeur 241 et placées dans le tampon 242.

Les données audio sont décodées par le décodeur 231, réencodées par l'encodeur 232 dans un format approprié pour une transmission vers l'enceinte 250, et placées dans le tampon 233, pour être ensuite envoyées vers l'enceinte 250 par l'émetteur radioélectrique 234.

L'unité électronique de commande de l'enceinte 250 reçoit, via le récepteur radioélectrique 255, les données audio réencodées, et les place dans son tampon de réception 252. Ces données audio sont ensuite décodées par le décodeur 253, et placées dans le tampon 254.

Comme indiqué précédemment, les données vidéo sont associées à des indices temporels de présentation (présentation timestamps ou PTS) , propres à chaque image. Les données audio sont traitées par trames (représentant une succession d'échantillons), et chaque trame audio est également associée à un PTS qui permet de faire correspondre la trame audio avec le PTS de l'image avec laquelle la trame audio doit être simultanément diffusée.

Il faut noter que les PTS utilisés ici de sont pas ceux provenant du flux d'entrée issu de la source 200, qui peut ou non contenir des PTS (PTS dits « primaires »), mais des PTS élaborés par l'unité électronique de commande de l'appareil décodeur 220 (PTS dits « secondaires »). Pour pouvoir utiliser les PTS, l'unité électronique de commande de l'appareil décodeur 220 et l'unité électronique de commande de l'enceinte 250 comprennent respectivement une horloge 249 et une horloge 251. Les horloges 249 et 251 sont synchronisées entre elles, par des moyens tels que les protocoles NTP, PTP ou autres. L'horloge 249 devient l'horloge de référence pour la restitution, et tient donc le rôle d'horloge de référence ou PCR (de l'anglais « Program Clock Reference »).

Les PTS secondaires sont calculés par l'unité électronique de commande de l'appareil décodeur 220, en prenant en compte :

> o l'ordre et la durée de présentation de chaque image et trame audio du flux d'entrée (ce flux comprenant éventuellement lui-même des PTS primaires exprimés à partir d'une PCR externe transmise dans le flux 200)

> o le décalage (ou offset) de présentation lié aux tampons utilisés d'une part entre l'appareil décodeur 220 et l'enceinte 250, et d'autre part dans l'enceinte 250.

Les PTS sont exprimés en nombre de « ticks » de l'horloge de référence PCR, le plus souvent avec une résolution inférieure (en général la PCR est une horloge à 27MHz, alors que la résolution des PTS est de 90kHz).

Lorsqu'arrive le moment de présentation des données vidéo (l'indice temporel de présentation est atteint), les trames vidéo sont envoyées vers le téléviseur 300 via un lien vidéo. Lorsqu'arrive le moment de présentation des données audio (l'indice temporel de présentation est atteint), les échantillons audio sont envoyés au convertisseur numérique/analogique de l'enceinte 250, pour être ensuite amplifiés et restitués par le haut-parleur de l'organe de restitution sonore 256.

La gestion des tampons présents dans l'appareil décodeur 220 est classique.

Du côté de l'enceinte, deux stratégies de mise en mémoire tampon sont possible :

• faire décoder au plus vite les trames audio par le décodeur 253, et placer chaque trame décodée dans le tampon 254 avant d'atteindre le PTS correspondant ;

• garder les trames codées dans le tampon 252, et faire décoder les trames par le décodeur 253 juste avant le PTS, puis passer à la restitution sonore.

Ces deux possibilités ne portent pas à conséquence sur la présente invention, qui peut être réalisée dans les deux cas.

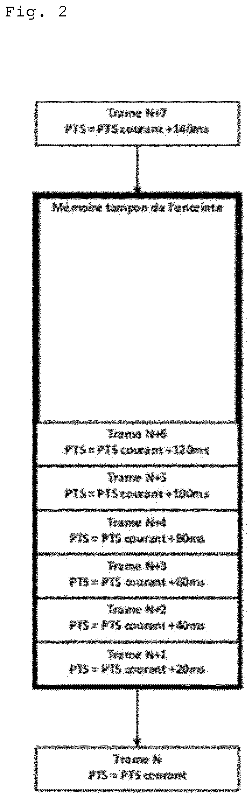

On a représenté sur la figure 2 les données audio mémorisées dans un des tampons de l'enceinte 250 (qu'il s'agisse du tampon 252 ou du tampon 254) en considérant que chaque trame dure 20 ms :

• la trame N, dont le PTS correspond au PTS courant, est retirée du tampon pour être restituée par l'organe de restitution 256 ;

• les trames N+1 à N+6 sont dans le tampon, en attente de lecture (qui interviendra lorsque leur PTS sera égal au PTS courant) ;

• la trame N+7, en cours de réception par l'enceinte 250, va entrer dans le tampon.

Il y a, au moment correspondant à la figure 2, 120ms d'échantillons présent dans le tampon. Ceci correspond à la marge actuelle du tampon. Tant que les perturbations de transmission durent moins de 120ms, il n'y aura pas de répercussion audible.

Le tampon permet donc une latence de 120 ms entre la réception d'une trame et sa restitution sonore.

Lorsque le tampon est totalement vide sans que de nouvelles trames ne soient disponibles, la « marge » est alors négative, sa valeur correspondant alors au temps pendant lequel aucune donnée audio n'a pu être jouée.

Le procédé de l'invention vise à permettre un ajustement de la latence et comprend les étapes de :

- déterminer un niveau de remplissage du tampon ;
- comparer le niveau de remplissage du tampon à un objectif de remplissage du tampon et en déduire une différence de remplissage ;
- augmenter ou diminuer le nombre de trames audio mémorisées en fonction de la différence de remplissage de manière à ajuster la latence.

Ce procédé va être maintenant détaillé.

L'objectif de remplissage, ou cible du tampon, est égal à la somme d'une valeur de sécurité et d'une marge.

La « marge » du tampon correspond au niveau de robustesse estimé. La marge instantanée correspond à la valeur du tampon à un instant donné. Il est cependant avantageux, afin de minimiser les risques de coupure, de calculer la marge comme une valeur glissante (et non pas instantanée), qui sera fonction des valeurs instantanées actuelles et passées.

Il y a de nombreuses méthodes pour estimer une telle valeur glissante. Par exemple :

- marge = minimum du tampon pendant les 2 dernières minutes

- marge estimée régulièrement (par exemple toutes les 20ms) : marge = (marge_prev + tampon_actuel *9 ) / 10 dans laquelle marge_prev est la marge précédemment estimée et tampon_actuel est le niveau de remplissage actuel du tampon. Cette méthode revient à la mise en oeuvre d'un filtre passe-bas permettant de caractériser « l'oubli » des données/estimations passées.

Il est bien sûr possible d'utiliser d'autres méthodes, ou de combiner plusieurs méthodes entre elles, comme par exemple en combinant les deux méthodes données ici en exemple. Avant d'ajuster la latence, il convient de déterminer si l'on souhaite augmenter ou réduire la latence courante. Pour ce faire, on commence ici par déterminer un seuil de sécurité sous lequel on ne souhaite pas descendre. Une valeur comprise entre 70 et 200ms, par exemple, sera approprié dans beaucoup de cas. Cette valeur « sécurité » est destinée à compenser des perturbations imprévues.

Dans un environnement ayant précédemment rencontré de nombreuses perturbations (s'étant trouvé souvent avec des valeurs de marge négatives), on peut décider d'augmenter cette valeur de sécurité.

L'objectif de remplissage du tampon est déterminé de la façon suivante :

```
cible_tampon = sécurité + marge_souhaitée
```

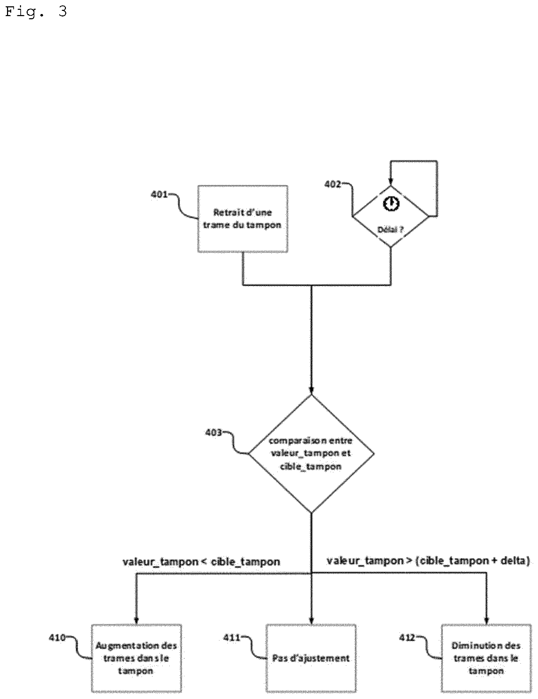

En référence à la figure 3, le niveau actuel de remplissage du tampon (valeur_tampon) est calculé régulièrement, par exemple lors du retrait des données audio d'une trame pour la diffusion par le haut-parleur (401), ou à intervalle régulier (par exemple toutes les 20ms, ce qui correspond à la durée d'une trame) si le tampon est vide (402).

Le niveau de remplissage actuel du tampon est alors comparé (403) à l'objectif de remplissage du tampon, selon les critères suivants :

- si valeur_tampon < cible_tampon, alors il faut augmenter la quantité de trames dans le tampon (410) ;

- si valeur_tampon >= (cible_tampon + 25%), alors il est possible de diminuer la quantité de trames dans le tampon (412) ;

- sinon, on ne réalise pas d'ajustement (411)

Le pourcentage de 25% représente une valeur d'amortissement qui peut être ajustée, en fonction des stratégies employées, pour éviter de trop nombreux ajustements de latence. Il est préférable de conserver une valeur minimale (ne pas le réduire à 0%) afin d'éviter les ajustements intempestifs du système.

On comprend qu'augmenter la quantité de trames dans le tampon revient à augmenter la latence, et diminuer la quantité des trames dans le tampon revient à réduire la latence.

Pour ajuster la latence, deux approches sont possibles :

- ajuster les horloges,

- ajuster les PTS.

L'ajustement des horloges va maintenant être expliqué. Pour ajuster la latence à la hausse, on retarde légèrement (par exemple d'une durée inférieure ou égale à 150 ps, telle que 50 ps) les horloges 249 et 251. Les deux horloges devront être ajustées de manière identique, afin de préserver la synchronisation audio/vidéo.

Pour ajuster la latence à la baisse, on avance les horloges 249 et 251.

Afin d'avoir un ajustement simultané des deux horloges, plusieurs approches sont possibles :

- L'unité électronique de commande de l'enceinte 250 procède à l'ajustement de sa propre horloge de restitution (251) et envoie un message d'ajustement à l'unité électronique de commande de l'appareil décodeur 220 qui ajustera son horloge 249.

- L'unité électronique de commande de l'enceinte 250 transmet les informations d'ajustement à l'unité électronique de commande de l'appareil décodeur 220 (ou cette dernière calcule elle-même l'ajustement nécessaire, si elle a accès aux valeurs des tampons de l'enceinte), et l'unité électronique de commande de l'appareil décodeur 220 ajuste son horloge. L'unité électronique de commande de l'appareil décodeur 220 enverra ensuite un message d'ajustement d'horloge à l'unité électronique de commande de l'enceinte 250, ou les deux horloges se synchroniseront sans nécessiter de message d'ajustement si un protocole tel que NTP ou PTP est employé. A noter qu'il est préférable que ce soit l'unité électronique de commande de l'appareil décodeur 220 qui réalise l'ajustement d'horloge, car cela permet de gérer les cas où plusieurs enceintes 250 sont connectées (et donc asservies) à l'unité électronique de commande de l'appareil décodeur 220.

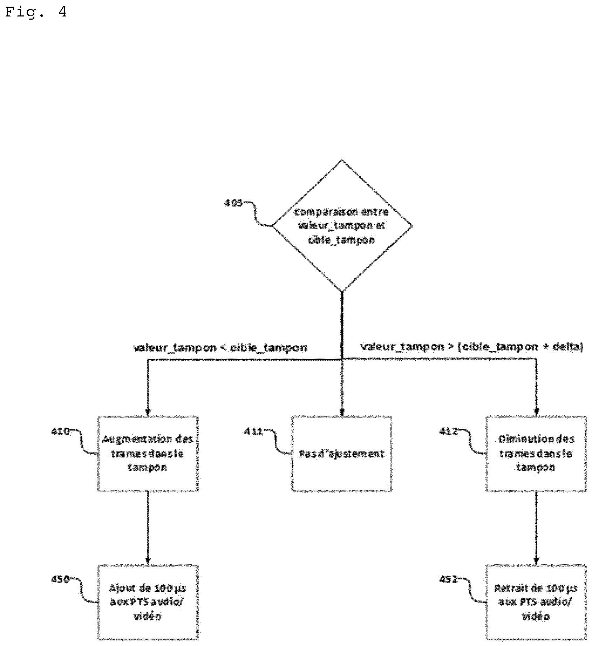

L'ajustement des PTS va maintenant être expliqué en référence à la figure 4. L'idée n'est plus de réaliser un ajustement d'horloge, mais d'ajuster les PTS des futures données audio et vidéo.

Par exemple, au lieu de retarder l'horloge de 100 ps, il est possible d'ajouter 100 $\mu$s aux futurs PTS des données audio et vidéo (450), ce qui a pour effet d'augmenter la latence, et donc l'augmentation du niveau de remplissage du tampon. A contrario, diminuer les PTS (452) a pour conséquence la diminution de la latence, et donc du niveau de remplissage du tampon.

L'ajustement des PTS peut être réalisé soit simultanément par l'unité électronique de l'enceinte 250 et par l'unité électronique de l'appareil décodeur 220, soit totalement par l'unité électronique de l'appareil décodeur 220. Cette dernière approche est plus simple, car tout l'ajustement est alors réalisé par un seul équipement. Pour ce faire, l'unité électronique de l'enceinte 250 transmet régulièrement à l'unité électronique de l'appareil décodeur 220 l'information du niveau de remplissage de son tampon, ce qui permet à l'unité électronique de l'appareil décodeur 220 d'avoir toutes les informations nécessaires pour évaluer elle-même les ajustements à réaliser.

Dans le mode d'ajustement de horloges comme dans celui des PTS, les effets sur la restitution des données audio et vidéo seront similaires.

Du côté de l'enceinte 250, l'ajustement de l'horloge de restitution causera des ajustements des données audio à restituer, avec différentes possibilités techniques telles que par exemple :

- pour une diminution de la latence :

  - retrait d'échantillons PCM,

  - rééchantillonnage d'une trame ;

- pour une augmentation de la latence :

  - ajout d'échantillons PCM (copie d'échantillons précédents),

  - interpolation d'échantillons PCM,

  - rééchantillonnage d'une trame.

Du côté de l'appareil décodeur 220, les ajustements d'horloge ou des PTS impacteront le moment de présentation des images, et dans les cas extrêmes (ajustement de plus de la durée d'une image) il pourra y avoir duplication ou suppression d'une image.

Il est préférable de réaliser les ajustements de manière progressive (par exemple d'une durée unitaire inférieure ou égale à 150 ps, telle que 50 $\mu$s à la fois), afin que les ajustements audio/vidéo, également progressifs, soient le moins perceptibles possible par l'utilisateur.

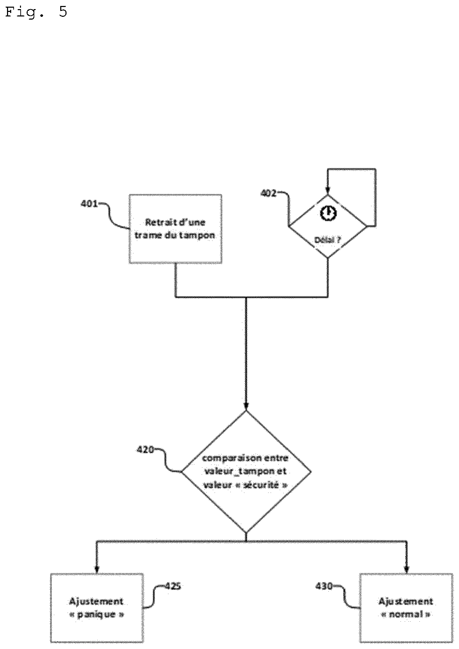

Par exemple, avec des trames audio de 20ms, il y a 50 trames audio par seconde. Avec un ajustement maximum de 50 $\mu$s à chaque trame audio, le système de l'invention ajustera la latence d'une durée maximum de 50*50 $\mu$s soit 2,5 ms par seconde. Ceci n'est pas perceptible par l'utilisateur. L'ajustement progressif précédemment défini permet une régulation douce du système, particulièrement efficace dans le cas de perturbations plus ou moins régulières. Cependant, pour le cas où des perturbations surviennent massivement ou brutalement, le mode normal d'ajustement décrit précédemment peut ne pas suffire. Le procédé de l'invention prévoit ici avantageusement un mode exceptionnel d'ajustement, baptisé « panique », qui est illustré à la figure 5.

Pour mettre en oeuvre ce mode d'ajustement exceptionnel, on détermine au préalable un seuil d'ajustement « fort » si le niveau de remplissage actuel du tampon (valeur_tampon) est par trop inférieur à la valeur de sécurité. Par exemple, on choisira un seuil de 80% de la valeur de sécurité, de sorte que le mode « panique » se déclenche lorsque :

```
valeur_tampon < 80% * sécurité.
```

Selon le mode « panique », on s'autorise à augmenter l'ajustement de la latence de façon plus forte, par exemple jusqu'à 10, voire 20 ms.

En variante, il est également possible d'ajuster la latence d'autant plus fortement que le niveau de remplissage actuel du tampon est en dessous de la valeur de sécurité. Par exemple, on définira plusieurs seuils, à savoir un premier seuil à 80% de la valeur de sécurité, un deuxième seuil à 60% de la valeur de sécurité et un troisième seuil à 40% de la valeur de sécurité. Chaque seuil est associé à un niveau d'ajustement tel que :

- si (60% * sécurité) < valeur_tampon ≤ (80% * sécurité), alors ajustement de la latence de 10ms ;

- si (40% * sécurité) < valeur_tampon ≤ (60% * sécurité), alors ajustement de la latence de 20ms ;

- si valeur_tampon ≤ (40% * sécurité), ajustement de la latence de 40ms.

Les ajustements plus forts sont plus susceptibles d'être perçus par l'utilisateur, mais il s'agit d'un moindre mal par rapport à une coupure dans la restitution audio.

Les valeurs d'ajustement de la latence indiquées ici ne le sont qu'à titre d'exemple. Ainsi, les valeurs mentionnées de 10ms, 20ms et 40ms pourraient être remplacées par d'autres valeurs, comme par exemple 20ms, 40ms et 100ms, l'essentiel étant que la première valeur soit inférieure ou égale à la seconde, qui est elle-même inférieure ou égale à la troisième.

Le même principe vaut pour les valeurs de sécurité (80%, 60% et 40%) qui peuvent être remplacées par d'autres valeurs.

Si le tampon devient totalement vide en cours de lecture alors que la précédente trame audio a été intégralement restituée, alors il y aura une coupure dans le son. Dans ce cas, il est judicieux d'acter la coupure, et d'effectuer un remplissage du tampon jusqu'à la valeur cible avant de reprendre la lecture, au lieu de réaliser un ajustement progressif. En effet, si l'on se trouve dans cette situation, c'est que les ajustements progressifs n'ont pas suffi à maintenir des données audio dans le tampon, et il est probable qu'une tentative d'ajustement progressif se solde par une succession de vidages totaux du tampon, engendrant de multiples coupures dans la lecture. Dans un tel cas, il peut être préférable d'avoir une unique coupure plus longue avant de reprendre la lecture avec taux de remplissage optimal du tampon, plutôt que d'avoir un système qui oscille entre lectures et coupures.

D'autres variantes de ce mode « panique » sont bien sûr possibles. Par exemple, dans une variante simplifiée, on pourra décider, dès que valeur_tampon < sécurité, d'ajuster directement le remplissage du tampon jusqu'à l'objecti de remplissage cible_tampon avant de reprendre la lecture.

Le mode « panique » est considéré comme prioritaire par rapport à l'ajustement dynamique « normal » de la latence :

- le niveau de remplissage actuel du tampon (valeur_tampon) est calculé régulièrement, par exemple lors du retrait des données audio d'une trame pour lecture sur le haut-parleur (401), ou à intervalle régulier (par exemple toutes les 20ms, ce qui correspond à la durée d'une trame) si le tampon est vide (402).

- le niveau de remplissage du tampon est tout d'abord évalué par rapport à la valeur sécurité (420).

- en fonction de cette évaluation, on déclenche l'ajustement selon le mode « panique » (425), ou selon le mode « normal » (430).

Lors du démarrage d'une diffusion (lecture d'un enregistrement sur un disque dur ou d'une vidéo à la demande, zapping, ...), il convient de déterminer une latence initiale souhaitée, le système ne disposant alors pas d'estimation du niveau actuel de remplissage (valeur_tampon).

Plusieurs approches sont possibles, comme par exemple :

- utiliser une latence de départ déterminée en fonction des latences rencontrées lors des précédentes diffusions ;

- utiliser une latence de départ forte, et laisser le système s'optimiser tout seul ;

- utiliser une latence faible, et laisser le système éventuellement ajuster sa latence si besoin.

Cette dernière approche présente l'avantage de permettre une latence au démarrage d'une diffusion qui soit plus faible, ce qui est particulièrement avantageux en cas de zappings enchainés, afin de présenter les chaines au plus vite.

On pourra par exemple décider de démarrer la diffusion lorsque l'objectif de remplissage (valeur cible_tampon) sera atteint, voire avant (par exemple 50ms). Dans ce dernier cas, le système, après un rapide démarrage de la lecture, effectuera systématiquement des ajustements de la latence une fois la session de lecture démarrée.

Dans un mode de réalisation particulier, l'appareil décodeur est relié à plusieurs enceintes sans fil (ici un nombre N d'enceintes).

Dans ce cas, le niveau de remplissage déterminé est calculé à partir du niveau de remplissage des tampons d'au moins un groupe d'enceintes parmi lesdites enceintes. Ainsi, au lieu de ne considérer que le niveau de remplissage actuel du tampon (valeur_tampon) d'une seule enceinte, le système prend en compte une valeur tampon globale (valeur_tampon_globale) calculée à partir du niveau de remplissage actuel (valeur_tampon) de chacune des enceintes du groupe considéré.

Selon une première variante, le niveau de remplissage déterminé est calculé à partir du niveau de remplissage des tampons des N enceintes.

On calcule ici la valeur globale comme étant le niveau de remplissage le plus bas parmi les niveaux de remplissage actuels des tampons des N enceintes restituant le son, soit : valeur_tampon_globale = min(valeur_tampon$_1$, ... , valeur_tampon$_N$ ) . Le système utilise ensuite cette valeur tampon globale (en lieu et place de la valeur individuelle définie dans le mode de réalisation précédemment décrit) pour calculer l'ajustement de latence nécessaire. Ainsi, le système s'ajuste de façon à éviter qu'aucune des enceintes ne présente de coupure audio.

Selon une deuxième variante, on ne considère qu'un sous-ensemble des enceintes pour calculer la valeur globale du tampon, en choisissant de potentiellement laisser une ou plusieurs enceintes avoir des coupures dans la restitution sonore. Une telle variante est par exemple intéressante dans un système possédant des enceintes synchronisées dans plusieurs pièces (système audio dit « multi-room »). Dans un tel cas, ou pourra ne calculer la valeur de tampon globale en ne considérant que les enceintes situées dans la même pièce que celle dans laquelle se trouve le téléviseur.

La logique sous-jacente est qu'il est difficilement acceptable d'avoir des coupures sonores sur les enceintes servant activement à l'expérience télévisuelle, alors que ceci est plus acceptable pour des enceintes situées dans d'autres pièces. Ceci permet, dans les cas où la liaison avec les enceintes des autres pièces est plus perturbée, de ne pas trop augmenter la latence du système télévisuel principal.

Dans cette deuxième variante, on a défini deux groupes : un groupe d'enceintes principales situées à proximité du téléviseur et qui sont nécessaires à une restitution audio-vidéo de type « home cinéma » et un groupe d'enceintes annexes situées dans une ou plusieurs autres pièces.

Dans la stratégie la plus simple, seuls les niveaux de remplissage du tampon des enceintes principales sont utilisés pour le calcul du niveau de remplissage global. Alors, la valeur globale correspond au niveau de remplissage le plus bas parmi les niveaux de remplissage actuels des tampons des enceintes principales.

Des stratégies intermédiaires sont possibles, en privilégiant les enceintes dites « nécessaires » (celles situées dans la même pièce que l'écran), mais en prenant en compte les enceintes « annexes » si elles ne pénalisent pas trop le système.

Par exemple, on peut ne prendre en compte les enceintes annexes que si leurs valeurs de tampon est proche de la valeur tampon des enceintes nécessaires, avec un seuil de 5 ou 10% de tolérance. Dans un tel cas, le calcul de la valeur tampon globale sera le suivant (en choisissant un seuil de tolérance de 10%) :

```
valeur_tampon_néssaire = min(valeur_tampon_nécessaires)

valeur_tampon    globale    =    min(valeur_tampon_nécessaire,
max(valeur_tampon_nécessaire*0.9, min(valeur_tampon_annexes))).
```

Bien entendu, l'invention n'est pas limitée au mode de réalisation décrit mais englobe toute variante entrant dans le champ de l'invention telle que définie par les revendications.

En particulier, Le système peut avoir une structure différente de celle décrite, et comporter par exemple un nombre différent d'enceintes sans fil.

L'émetteur Wi-Fi peut être intégré au décodeur ou le décodeur peut être relié avec une liaison filaire à un réseau de type LAN. L'enceinte peut être reliée via une liaison Wi-Fi au réseau de type LAN par le biais d'un point d'accès extérieur au décodeur.

Le procédé peut être appliqué à l'un quelconque des tampons de l'enceinte (par exemple 252 ou 254) ou à plusieurs tampons de l'enceinte.

On peut prévoir plus de deux seuils d'ajustement, ou au contraire un seuil.

## Revendications

1. Procédé de diffusion de signaux audio/vidéo au moyen d'un système audio/vidéo comprenant un appareil décodeur relié à un écran d'affichage et à au moins une enceinte sans fil, l'appareil décodeur comprenant un démultiplexeur ayant une entrée reliée à une source de données audio/vidéo, une première sortie reliée à un circuit de traitement vidéo agencé pour fournir à l'écran d'affichage des données vidéo et une deuxième sortie reliée à un circuit de traitement audio agencé pour fournir à un émetteur radioélectrique des trames audio encodées, l'enceinte comprenant un récepteur radioélectrique relié à un circuit de décodage agencé pour fournir à un organe de restitution sonore des trames audio décodées issus du décodage des trames audio encodées, l'enceinte comprenant une horloge synchronisée avec une horloge du décodeur et un tampon de mémorisation de trames audio autorisant une latence entre la réception des trames audio encodées et la fourniture des trames sonores décodées, le procédé comprenant les étapes de :

   - déterminer un niveau de remplissage du tampon de ladite au moins une enceinte ;
   - comparer le niveau de remplissage du tampon de ladite au moins une enceinte à un objectif de remplissage égal à la somme d'une valeur de sécurité, destinée à compenser des perturbations imprévues et correspondant à une valeur minimale de l'objectif de remplissage, et d'une marge égale à une valeur glissante qui est fonction des valeurs actuelles et passées du niveau de remplissage du tampon, et en déduire une différence de remplissage ;
   - augmenter ou diminuer le nombre de trames audio mémorisées en fonction de la différence de remplissage de manière à ajuster la latence.

2. Procédé selon la revendication 1, dans lequel le nombre de trames audio mémorisées est augmenté en retardant les horloges d'une durée prédéterminée et le nombre de trames audio mémorisées est diminué en avançant les horloges d'une durée prédéterminée.

3. Procédé selon la revendication 2, dans lequel la durée prédéterminée est inférieure ou égale à 150 $\mu$s environ.

4. Procédé selon la revendication 1, dans lequel, un indice temporel de présentation étant associé à chaque donnée vidéo et à chaque trame audio correspondante, le nombre de trames audio mémorisées est augmenté en ajoutant une durée prédéterminée aux indices temporels de présentation et le nombre de trames audio mémorisées est diminué en retranchant une durée prédéterminée des indices temporels de présentation.

5. Procédé selon la revendication 4, dans lequel la durée prédéterminée est inférieure ou égale à 150 $\mu$s environ.

6. Procédé selon l'une quelconque des revendications 2 à 5, comprenant l'étape, après une diminution de la latence, de :

   - supprimer des échantillons d'une trame audio avant transmission à l'organe de restitution sonore ou rééchantillonner une trame audio ;
   - éventuellement, suppression d'une image dans les données vidéo.

7. Procédé selon l'une quelconque des revendications 2 à 6, comprenant l'étape, après une augmentation de la latence, de :

   - ajouter des échantillons dans une trame audio avant transmission à l'organe de restitution sonore ou rééchantillonner une trame audio ou interpoler des échantillons dans une trame audio ;
   - éventuellement, insertion d'une image dans les données vidéo, par exemple au moyen d'une duplication ou d'une interpolation.

8. Procédé selon l'une quelconque des revendications précédentes, dans lequel le nombre de trames audio mémorisées est diminué si la différence de remplissage est supérieure ou égale à un pourcentage prédéterminé en plus de l'objectif de remplissage.

9. Procédé selon la revendication 1, dans lequel la marge est égale au niveau de remplissage minimum sur une durée passée prédéterminée.

**10.** Procédé selon la revendication 1, dans lequel la marge est égale au dixième de la somme de la marge précédente et de neuf fois le niveau de remplissage actuel.

**11.** Procédé selon l'une quelconque des revendications 1, 9 et 10, dans lequel la valeur de sécurité correspond à un remplissage autorisant une latence comprise entre 70 ms et 200 ms.

**12.** Procédé selon la revendication 10, dans lequel la valeur de sécurité est augmentée si la marge a été négative un nombre de fois supérieur à un seuil pendant un laps de temps prédéterminé.

**13.** Procédé selon l'une quelconque des revendications 1 et 9 à 12, comprenant une première étape de fort ajustement du remplissage lorsque le niveau de remplissage est inférieur à une première valeur seuil correspondant à un premier pourcentage de la valeur de sécurité.

**14.** Procédé selon la revendication 13, dans lequel la première valeur seuil est égale à environ 80% de la valeur de sécurité et la latence est modifiée d'une valeur inférieure ou égale à 20ms.

**15.** Procédé selon l'une quelconque des revendications 13 et 14, comprenant une deuxième étape de fort ajustement du remplissage lorsque le niveau de remplissage est inférieur à une deuxième valeur seuil inférieure à la première valeur seuil.

**16.** Procédé selon la revendication 13, dans lequel la deuxième valeur seuil est égale à environ 60% de la valeur de sécurité et la latence est modifiée d'une valeur inférieure ou égale à 40ms.

**17.** Procédé selon l'une quelconque des revendications précédentes, dans lequel le niveau de remplissage du tampon est déterminé à chaque sortie d'une trame audio hors du tampon ou à intervalle régulier.

**18.** Procédé selon l'une quelconque des revendications précédentes, dans lequel l'appareil décodeur est relié à plusieurs enceintes sans fil et dans lequel le niveau de remplissage déterminé est un niveau de remplissage global des tampons d'au moins un groupe d'enceintes parmi lesdites enceintes.

**19.** Procédé selon la revendication 18, dans lequel les enceintes appartenant au groupe sont à proximité de l'écran.

**20.** Procédé selon l'une quelconque des revendications 18 et 19, dans lequel le niveau de remplissage global est une valeur minimale des niveaux de remplissage du tampon de chacune des enceintes considérées.

**21.** Système de diffusion multimédia comprenant un décodeur relié à un écran d'affichage et à au moins une enceinte sans fil, le décodeur comprenant un démultiplexeur ayant une entrée reliée à une source de données numériques audio/vidéo, une première sortie reliée à un circuit de traitement vidéo agencé pour fournir à l'écran d'affichage des trames vidéo et une deuxième sortie reliée à un circuit de traitement audio agencé pour fournir à un émetteur radioélectrique des trames audio encodées, l'enceinte comprenant un récepteur radioélectrique relié à un circuit de décodage agencé pour fournir à un organe de restitution sonore des trames audio décodées issus du décodage des trames audio encodées, l'enceinte comprenant un tampon de mémorisation de trames audio autorisant une latence entre la réception des trames audio encodées et la fourniture des trames sonores décodées et le système comprenant au moins une unité électronique de commande agencée pour mettre en oeuvre le procédé selon l'une quelconque des revendications précédentes.

**22.** Appareil décodeur agencé pour mettre en oeuvre le procédé selon l'une quelconque des revendications 1 à 20.

**23.** Enceinte agencée pour mettre en oeuvre le procédé selon l'une quelconque des revendications 1 à 20.

**24.** Programme informatique comprenant des instructions agencées pour mettre en oeuvre le procédé selon l'une quelconque des revendications 1 à 20.

**25.** Support de données contenant un programme selon la revendication 24.

**Patentansprüche**

1. Verfahren zur Übertragung von Audio/Video-Signalen mittels eines Audio/Video-Systems, das ein Decodergerät umfasst, das mit einem Anzeigebildschirm und mit mindestens einem drahtlosen Lautsprecher verbunden ist, wobei das Decodergerät einen Demultiplexer umfasst, der einen Eingang hat, der mit einer Audio/Video-Datenquelle verbunden ist, einen ersten Ausgang, der mit einer Videoverarbeitungsschaltung verbunden ist, die ausgebildet ist, Videodaten an den Anzeigebildschirm zu liefern, und einen zweiten Ausgang, der mit einer Audioverarbeitungsschaltung verbunden ist, die ausgebildet ist, kodierte Audiorahmen an einen Funksender zu liefern, wobei der Lautsprecher einen Funkempfänger umfasst, der mit einer Dekodierungsschaltung verbunden ist, die ausgebildet ist, dekodierte Audiorahmen, die aus der Dekodierung der kodierten Audiorahmen stammen, an ein Tonwiedergabeorgan zu liefern, wobei der Lautsprecher einen Taktgeber umfasst, der mit einem Taktgeber des Decoders synchronisiert ist, und einen Puffer zum Speichern von Audiorahmen, der eine Latenz zwischen dem Empfang der kodierten Audiorahmen und der Lieferung von dekodierten Tonrahmen gewährleistet, wobei das Verfahren die Schritte umfasst:

   - Bestimmen eines Füllniveaus des Puffers des genannten mindestens einen Lautsprechers;
   - Vergleichen des Füllniveaus des Puffers des genannten mindestens einen Lautsprechers mit einem Füllziel, das gleich der Summe eines Sicherheitswerts, der dazu bestimmt ist, unvorhergesehene Störungen zu kompensieren, und der einem Minimalwert des Füllziels entspricht, und einer Spanne ist, die gleich einem Gleitwert ist, der von aktuellen und vergangenen Werten des Füllniveaus des Puffers abhängt, und daraus Ableiten einer Fülldifferenz;
   - Erhöhen oder Verringern der Anzahl an gespeicherten Audiorahmen in Abhängigkeit von der Fülldifferenz, um die Latenz anzupassen.

2. Verfahren nach Anspruch 1, bei dem die Anzahl an gespeicherten Audiorahmen erhöht wird, indem die Taktgeber um eine vorbestimmte Dauer verzögert werden, und die Anzahl an gespeicherten Audiorahmen verringert wird, indem die Taktgeber um eine vorbestimmte Dauer vorgestellt werden.

3. Verfahren nach Anspruch 2, bei dem die vorbestimmte Dauer kleiner oder gleich ungefähr 150 µs ist.

4. Verfahren nach Anspruch 1, bei dem unter Berücksichtigung, dass ein Präsentationszeitindex jedem Videodatenelement und jedem entsprechenden Audiorahmen zugeordnet ist, die Anzahl an gespeicherten Audiorahmen erhöht wird, indem eine vorbestimmte Dauer zu den Präsentationszeitindizes zugefügt wird, und die Anzahl an gespeicherten Audiorahmen verringert wird, indem eine vorbestimmte Dauer von den Präsentationzeitindizes abgezogen wird.

5. Verfahren nach Anspruch 4, bei dem die vorbestimmte Dauer kleiner oder gleich ungefähr 150 µs ist.

6. Verfahren nach einem der vorhergehenden Ansprüche 2 bis 5, umfassend nach einer Verringerung der Latenz den Schritt:

   - Unterdrücken von Samples eines Audiorahmens vor der Überragung zu einem Tonwiedergabeorgan oder Resampling eines Audiorahmens;
   - eventuell Unterdrücken eines Bildes in den Videodaten.

7. Verfahren nach einem der Ansprüche 2 bis 6, umfassend nach einer Erhöhung der Latenz den Schritt:

   - Hinzufügen von Samples in einen Audiorahmen vor der Übertragung zu dem Tonwiedergabeorgan oder Resampling eines Audiorahmens oder Interpolieren der Samples in einem Audiorahmen;
   - eventuell Einfügen eines Bildes in die Videodaten, beispielsweise mittels einer Duplikation oder einer Interpolation.

8. Verfahren nach einem der vorhergehenden Ansprüche, bei dem die Anzahl an gespeicherten Audiorahmen verringert wird, wenn die Fülldifferenz größer oder gleich einem vorbestimmten Prozentsatz über dem Füllziel ist.

9. Verfahren nach Anspruch 1, bei dem die Spanne gleich dem minimalen Füllniveau über eine vorbestimmte vergangene Dauer ist.

10. Verfahren nach Anspruch 1, bei dem die Spanne gleich dem Zehntel der Summe der vorherigen Spanne und dem Neunfachen des aktuellen Füllniveaus ist.

11. Verfahren nach einem der Ansprüche 1, 9 und 10, bei dem der Sicherheitswert einer Füllung entspricht, die eine Latenz zwischen 70 ms und 200 ms gewährleistet.

12. Verfahren nach Anspruch 10, bei dem der Sicherheitswert erhöht wird, wenn die Spanne für eine Anzahl von Malen, die über einem Schellenwert liegt, über eine vorbestimmte Zeitspanne negativ war.

13. Verfahren nach einem der Ansprüche 1 und 9 bis 12, umfassend einen ersten Schritt einer starken Anpassung der Füllung, wenn das Füllniveau niedriger als ein erster Schwellenwert ist, der einem ersten Prozentsatz des Sicherheitswerts entspricht.

14. Verfahren nach Anspruch 13, bei dem der erste Schwellenwert gleich ungefähr 80% des Sicherheitswerts ist und die Latenz um einen Wert, der kleiner oder gleich 20 ms ist, modifiziert wird.

15. Verfahren nach einem der Ansprüche 13 und 14, umfassend einen zweiten Schritt einer starken Anpassung der Füllung, wenn das Füllniveau kleiner als ein zweiter Schwellenwert ist, der kleiner als der erste Schwellenwert ist.

16. Verfahren nach Anspruch 13, bei dem der zweite Schwellenwert gleich ungefähr 60% des Sicherheitswerts ist und die Latenz um einen Wert, der kleiner oder gleich 40ms ist, modifiziert wird.

17. Verfahren nach einem der vorhergehenden Ansprüche, bei dem das Füllniveau des Puffers bei jedem Austritt eines Audiorahmens aus dem Puffer oder in einem regelmäßigen Intervall bestimmt wird.

18. Verfahren nach einem der vorhergehenden Ansprüche, bei dem das Decodergerät mit mehreren drahtlosen Lautsprechern verbunden ist und bei dem das vorbestimmte Füllniveau ein globales Füllniveau der Puffer mindestens einer Gruppe von Lautsprechern unter den genannten Lautsprechern ist.

19. Verfahren nach Anspruch 18, bei dem die Lautsprecher, die zu der Gruppe gehören, in der Nähe des Bildschirms sind.

20. Verfahren nach einem der Ansprüche 18 und 19, bei dem das globale Füllniveau ein Minimalwert der Füllniveaus des Puffers jedes der in Betracht gezogenen Lautsprecher ist.

21. Multimediaübertragungssystem, umfassend einen Decoder, der mit einem Anzeigebildschirm und mit mindestens einem drahtlosen Lautsprecher verbunden ist, wobei der Decoder einen Demultiplexer umfasst, der einen Eingang hat, der mit einer Audio/Video-Digitaldatenquelle verbunden ist, einen ersten Ausgang, der mit einer Videoverarbeitungsschaltung verbunden ist, die ausgebildet ist, dem Anzeigebildschirm Videorahmen zu liefern, und einen zweiten Ausgang, der mit einer Audioverarbeitungsschaltung verbunden ist, die ausgebildet ist, einem Funksender kodierte Audiorahmen zu liefern, wobei der Lautsprecher einen Funkempfänger umfasst, der mit einer Dekodierungsschaltung verbunden ist, die ausgebildet ist, einem Tonwiedergabeorgan dekodierte Audiorahmen zu liefern, die aus der Dekodierung von kodierten Audiorahmen stammen, wobei der Lautsprecher einen Puffer zum Speichern von Audiorahmen umfasst, der eine Latenz zwischen dem Empfang der kodierten Audiorahmen und der Lieferung der dekodierten Tonrahmen gewährleistet, und wobei das System mindestens eine elektronische Steuereinheit umfasst, die ausgebildet ist, das Verfahren nach einem der vorhergehenden Ansprüche durchzuführen.

22. Decodergerät, das ausgebildet ist, das Verfahren nach einem der Ansprüche 1 bis 20 durchzuführen.

23. Lautsprecher, der ausgebildet ist, das Verfahren nach einem der Ansprüche 1 bis 20 durchzuführen.

24. Computerprogramm, das Anweisungen umfasst, die ausgebildet sind, das Verfahren nach einem der Ansprüche 1 bis 20 durchzuführen.

25. Datenträger, der ein Programm nach Anspruch 24 enthält.

**Claims**

1. A method of playing back audio/video signals by means of an audio/video system comprising a decoder appliance connected to a display screen and to at least one wireless speaker, the decoder appliance comprising a demultiplexer having an input connected to a source of audio/video data, a first output connected to a video processor circuit arranged to supply video data to the display screen, and a second output connected to an audio processor circuit arranged to supply encoded audio frames to a radio transmitter, the speaker including a radio receiver connected to a decoder circuit arranged to supply a sound playback member with decoded audio frames resulting from decoding the encoded audio frames, the speaker including a clock that is synchronized with a clock of the decoder and a buffer for storing audio frames so as to allow latency between receiving encoded audio frames and supplying decoded audio frames, the method comprising the steps of:

   · determining a filling level of the buffer of said at least one speaker;
   · comparing the filling level of the buffer of said at least one speaker with a filling target equal to the sum of a safety value, aimed to compensate unexpected disturbances and corresponding to a minimum value of the filling target, plus a margin equal to a sliding value as a function of present and past filling levels of the buffer, and deducing a filling difference therefrom;
   · increasing or decreasing the number of audio frames that are stored as a function of the filling difference so as to adjust the latency.

2. A method according to claim 1, wherein the number of stored audio frames is increased by retarding the clocks by a predetermined duration and the number of stored audio frames is decreased by advancing the clocks by a predetermined duration.

3. A method according to claim 2, wherein the predetermined duration is less that are equal to about 150 µs.

4. A method according to claim 1, wherein a presentation timestamp is associated with each image of video data and with each corresponding audio frame, with the number of stored audio frames being increased by adding a predetermined duration to the presentation timestamps, and with the number of stored audio frames being decreased by subtracting a predetermined duration from the presentation timestamps.

5. A method according to claim 4, wherein the predetermined duration is less than or equal to about 150 us.

6. A method according to any one of claims 2 to 5, including a step, after decreasing latency, of:

   · eliminating samples from an audio frame before transmission to the sound playback member or re-sampling an audio frame;
   · optionally, eliminating an image from the video data.

7. A method according to any one of claims 2 to 6, including a step, after increasing latency, of:

   · adding samples to an audio frame before transmission to the sound playback member or re-sampling an audio frame or interpolating samples in an audio frame;
   · optionally, inserting an image into the video data, e.g. by duplication or by interpolation.

8. A method according to any preceding claim, wherein the number of stored audio frames is decreased if the filling difference is greater than or equal to a predetermined percentage above the filling target.

9. A method according to claim 1, wherein the margin is equal to the minimum filling level over a predetermined past duration.

10. A method according to claim 1, wherein the margin is equal to one-tenth of the sum of the preceding margin plus nine times the present filling level.

11. A method according to any one of claims 1, 9 and 10, wherein the safety value corresponds to a filling level allowing latency in the range 70 ms to 200 ms.

12. A method according to claim 10, wherein the safety level is increased if the margin has been negative during a predetermined time lapse for a number of times that is greater than a threshold.

13. A method according to any one of claims 1 and 9 to 12, comprising a first stage of adjusting filling strongly when the filling level is less than a first threshold value corresponding to a first percentage of the safety value.

14. A method according to claim 13, wherein the first threshold value is equal to about 80% of the safety value, and the latency is modified by a value less than or equal to 20 ms.

15. A method according to claim 13 or claim 14, including a second stage of adjusting the filling strongly when the filling level is less than a second threshold value less than the first threshold value.

16. A method according to claim 13, wherein the second threshold value is equal to about 60% of the safety value, and the latency is modified by a value less than or equal to 40 ms.

17. A method according to any preceding claim, wherein the filling level of the buffer is determined each time an audio frame is extracted from the buffer or at regular intervals.

18. A method according to any preceding claim, wherein the decoder appliance is connected to a plurality of wireless speakers and wherein the predetermined filling level is a global filling level of the buffers of at least a group of speakers from among said speakers.

19. A method according to claim 18, wherein the speakers that belong to the group are in the proximity of the screen.

20. A method according to claim 18 or claim 19, wherein the global filling level is the minimum value of the filling levels of the buffers of each of the speakers under consideration.

21. A multimedia playback system comprising a decoder connected to a display screen and to at least one wireless speaker, the decoder comprising a demultiplexer having an input connected to a source of audio/video digital data, a first output connected to a video processor circuit arranged to supply video data to the display screen, and a second output connected to an audio processor circuit arranged to supply encoded audio frames to a radio transmitter, the speaker including a radio receiver connected to a decoder circuit arranged to supply a sound playback member with decoded audio frames resulting from decoding the encoded audio frames, the speaker including a buffer for storing audio frames so as to allow latency between receiving encoded audio frames and supplying decoded audio frames, and the system including at least one electronic control unit arranged to perform the method according to any preceding claim.

22. A decoder appliance arranged to perform the method according to any one of claims 1 to 20.

23. A speaker arranged to perform the method according to any one of claims 1 to 20.

24. A computer program including instructions arranged to perform the method according to any one of claims 1 to 20.

25. A data medium containing a program according to claim 24.

Fig. 1

Fig. 2

```
┌─────────────────────────────┐
│         Trame N+7           │
│  PTS = PTS courant +140ms   │
└─────────────────────────────┘
              │
              ▼
┌─────────────────────────────┐
│ Mémoire tampon de l'enceinte│
│                             │
│                             │
│                             │
│                             │
│                             │
├─────────────────────────────┤
│         Trame N+6           │
│  PTS = PTS courant +120ms   │
├─────────────────────────────┤
│         Trame N+5           │
│  PTS = PTS courant +100ms   │
├─────────────────────────────┤
│         Trame N+4           │
│  PTS = PTS courant +80ms    │
├─────────────────────────────┤
│         Trame N+3           │
│  PTS = PTS courant +60ms    │
├─────────────────────────────┤
│         Trame N+2           │
│  PTS = PTS courant +40ms    │
├─────────────────────────────┤
│         Trame N+1           │
│  PTS = PTS courant +20ms    │
└─────────────────────────────┘
              │
              ▼
┌─────────────────────────────┐
│          Trame N            │
│    PTS = PTS courant        │
└─────────────────────────────┘
```

Fig. 3

401 — Retrait d'une trame du tampon

402 — Délai ?

403 — comparaison entre valeur_tampon et cible_tampon

valeur_tampon < cible_tampon

valeur_tampon > (cible_tampon + delta)

410 — Augmentation des trames dans le tampon

411 — Pas d'ajustement

412 — Diminution des trames dans le tampon

Fig. 4

Fig. 5

401 — Retrait d'une trame du tampon

402 — Délai ?

420 — comparaison entre valeur_tampon et valeur « sécurité »

425 — Ajustement « panique »

430 — Ajustement « normal »

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013279888 A

- US 2018077443 A